# EUROPÄISCHE PATENTSCHRIFT

(11) **EP 3 172 472 B1**
(45) Veröffentlichungstag und Bekanntmachung des Hinweises auf die Patenterteilung: **24.10.2018**
(21) Anmeldenummer: 15729122.0
(22) Anmeldetag: 05.06.2015
(51) Int. Cl.: F16L 5/12, B60K 15/01, B60K 15/04, F16L 5/06

(54) **DURCHFÜHRUNGSVORRICHTUNG FÜR EINE WANDUNG**
FEED-THROUGH DEVICE FOR A WALL
DISPOSITIF DE TRAVERSÉE DE PAROI

(30) Priorität: 25.07.2014 DE 102014214705
(43) Veröffentlichungstag der Anmeldung: 31.05.2017
(73) Patentinhaber: TI Automotive Technology Center GmbH, 76437 Rastatt (DE)
(72) Erfinder: BÖCKER, Albert J., 76275 Ettlingen (DE); EHLER, Alex, 76437 Rastatt (DE); GMÜND, Patrick, 76149 Karlsruhe (DE); GRAUER, Peter, 76872 Steinweiler (DE); MICHAELIS, Gerrit, 77948 Friesenheim (DE)
(74) Vertreter: Wolf, Eckhard
(86) Internationale Anmeldenummer: PCT/EP2015/062546
(87) Internationale Veröffentlichungsnummer: WO 2016/012145

(56) Entgegenhaltungen:
- DE-A1- 4 234 262
- US-A- 5 295 851
- US-A- 5 704 400

## Beschreibung

Die Erfindung betrifft eine Durchführungsvorrichtung für eine Wandung mit einem ersten und einem zweiten Stutzenelement, die durch eine Durchbrechung der Wandung hindurch miteinander verbindbar sind, wobei das erste Stutzenelement einen Flansch aufweist, der ein Dichtelement trägt, das im verbundenen Zustand der zwei Stutzenelemente fluiddichtend an einer zur Durchbrechung in der Wandung benachbarten Wandungspartie anliegt, und wobei an dem zweiten Stutzenelement ein Abstützelement angeordnet ist, das sich im miteinander verbundenen Zustand der zwei Stutzenelemente auf der bezüglich des Dichtelements des ersten Stutzenelements anderen Seite der Wandung abstützt.

Bei einem eine Wandung aufweisenden Behältnis besteht regelmäßig das Bedürfnis, Zugang zum Innenraum des Behältnisses zu erlangen, um beispielsweise ein Fluid, welches flüssig oder gasförmig sein kann, in das Behältnis hinein- oder herauszuführen. Um dies zu erreichen, sind Durchführungsvorrichtungen der eingangs genannten Art bekannt. Dabei ist es regelmäßig erforderlich, dass die Durchführungsvorrichtung eine nach außen fluiddichte Verbindung zwischen der einen Seite und der anderen Seite der Wandung ermöglicht. Von Interesse ist dies vor allem bei Kraftstoffbehältern, insbesondere Kunststoff-Kraftstoffbehältern, bei denen beispielsweise beim Betankungsvorgang flüssiger Kraftstoff eingefüllt wird und aus denen beispielsweise zu Entlüftungszwecken gasförmige Kraftstoffdämpfe herausgeleitet werden. Während also einerseits flüssiger Kraftstoff in den Behälter eingefüllt und gasförmiger Kraftstoff aus dem Behälter herausgeleitet werden soll, dürfen aufgrund strenger Emissionsvorschriften keine Kraftstoffdämpfe oder gar Kraftstoff austreten. Während dies bei der Behälterwandung durch einen Aufbau mit mehreren Schichten unter Verwendung einer für Kraftstoffe undurchlässigen Schicht vergleichsweise einfach realisiert werden kann, so sind Öffnungen in der Behälterwandung für Durchführungen stets kritisch.

Eine Durchführungsvorrichtung der eingangs genannten Art ist aus der WO 2006/032672 A1 bekannt. Das Abstützelement ist dort als weiterer Flansch ausgebildet, der ebenso wie der Flansch an dem ersten Stutzenelement starr mit einem Rohrkörper des Stutzenelements verbunden ist. Beide Flansche liegen im zusammengeschraubten Zustand der zwei Stutzenelemente flächig an der Wandung an, wobei jeweils ein Dichtring in einer in den Flanschen vorgesehenen Nut eine Abdichtung bewirken soll. Hierbei ist nicht berücksichtigt, dass die Wandung im Laufe der Zeit einer Ausdehnung und Schrumpfung unterliegt, so dass eine dauerhafte Dichtigkeit der einmalig vorgenommenen Verschraubung nicht gewährleistet ist.

Ausgehend hiervon liegt der vorliegenden Erfindung die Aufgabe zugrunde, eine Durchführungsvorrichtung für eine Wandung der eingangs genannten Art bereitzustellen, die auf einfache Weise eine zuverlässige und dauerhafte Abdichtung nach außen hin gewährleistet.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht vor allem von dem Gedanken aus, dass eine Ausdehnung und Schrumpfung der Wandung durch den Einsatz eines elastischen Elements kompensiert werden kann. Gemäß der Erfindung ist daher das Abstützelement mit einer elastischen Partie mit dem zweiten Stutzenelement verbunden, die eine begrenzte Verschiebung des Abstützelements gegenüber dem zweiten Stutzenelement zumindest in Richtung einer Längsmittelachse des Stutzenelements erlaubt, wobei die das Abstützelement (36) mit dem zweiten Stutzenelement (12) verbindende elastische Partie als ringförmige Sicke (38) ausgebildet ist. Die primäre Abdichtung nach außen hin wird durch das von dem Flansch des ersten Stutzenelements getragene Dichtelement erreicht. Damit dieses Dichtelement seine Funktion erfüllen kann, wird es durch das Abstützelement auf der anderen Seite der Wandung gegen die erste Seite der Wandung angepresst. Die elastische Anordnung des Abstützelements muss zumindest in der Richtung wirksam sein, in der eine Ausdehnung oder Schrumpfung der Wandung stattfindet, also im Allgemeinen in Richtung einer Längsmittelachse des zweiten Stutzenelements. Darüber hinaus kann es von Vorteil sein, wenn die elastische Verbindung auch weitere Freiheitsgrade aufweist, beispielsweise um seitlich auf die Durchführungsvorrichtung wirkende Kräfte aufzufangen, ohne dabei die Dichtwirkung zu kompromittieren.

In bevorzugter Ausgestaltung der Erfindung weist das erste Stutzenelement einen ersten Rohrkörper und das zweite Stutzenelement einen zweiten Rohrkörper auf, wobei beispielsweise eines der Stutzenelemente im Bereich seines Rohrkörpers eine Außengewindepartie und das andere Stutzenelement im Bereich eines Endes seines Rohrkörpers eine Innengewindepartie aufweist, wobei die Außengewindepartie und die Innengewindepartie zur Verbindung der zwei Stutzenelemente miteinander verschraubbar sind. Bevorzugt weist der Rohrkörper des ersten Stutzenelements das Außengewinde und der Rohrkörper des zweiten Stutzenelements das Innengewinde auf, da dies eine günstigere Abdichtungskonstellation der Vorrichtung ergibt. Alternativ können die zwei Stutzenelemente auch über einen Bajonettmechanismus oder einen Rastmechanismus miteinander verbindbar sein, was die Montage erleichtern kann. Weiterhin ist es denkbar, dass die zwei Stutzenelemente permanent mittels Klebstoff oder einer Verschweißung miteinander verbunden werden.

In vorteilhafter Weiterbildung der Erfindung ist das Abstützelement des zweiten Stutzenelements als den Rohrkörper außenseitig umschließendes Ringelement ausgebildet und stellt somit eine fluiddichte Barriere dar. Die insbesondere in axialer Richtung des Rohrkörpers elastische Verbindung zwischen dem Abstützelement und dem Rohrkörper ermöglicht einen gleichbleibenden Anpressdruck des Abstützelements an der Wandung und damit auch des gegenüberliegenden Dichtelements an der Wandung bei den in der Praxis auftretenden, geringfügigen Ausdehnungen und Schrumpfungen der Wandstärke der Wandung aufgrund von Temperaturunterschieden oder durch Aufnahme und Abgabe von Kraftstoff in die Wandung bzw. aus der Wandung.

In weiterer Ausgestaltung der Erfindung kann das Abstützelement des zweiten Stutzenelements vorteilhaft eine der Wandung zugewandte Stirnfläche aufweisen, auf der eine keilförmige Rippe angeordnet ist. Diese keilförmige Rippe wird bei der Verbindung der zwei Stutzenelemente miteinander in das Material der Wandung hineingepresst und sorgt so einerseits für eine zusätzliche Abdichtung im Sinne einer Schneidendichtung und andererseits für eine Erhöhung der mechanischen Stabilität, so dass die Durchführungsvorrichtung bei mechanischer Belastung nicht gegenüber der Wandung verrutschen kann.

Bevorzugt bestehen sowohl die zwei Stutzenelemente als auch die Wandung jeweils aus einem Kunststoff, wobei die Wandung aus mindestens zwei Schichten Kunststoffe bestehen kann, von denen einer für flüssigen oder gasförmigen Kraftstoff undurchlässig ist. Als Materialien kommen insbesondere HDPE (high density polyethylene) als Grundwerkstoff und EVOH (Ethylen-Vinylalkohol-Copolymer) als Barrierewerkstoff in Frage. Die Stutzenelemente können aus einem festen Kunststoff wie POM (Polyoxymethylen) oder PA (Polyamid) bestehen. Das Dichtelement ist vorzugsweise als in einer Nut des Flansches angeordneter O-Ring ausgebildet, kann jedoch auch ein X-Ring oder ein anders gestaltetes Dichtelement sein.

Im Folgenden wird die Erfindung anhand eines in der Zeichnung in schematischer Weise dargestellten Ausführungsbeispiels näher erläutert. Es zeigt:
- Fig. 1: eine perspektivische Ansicht der zwei Stutzenelement der Durchführungsvorrichtung; und
- Fig. 2: die zwei Stutzenelemente gemäß Fig. 1 in einer durch eine Öffnung in einer Wandung hindurch miteinander verbundenen Anordnung.

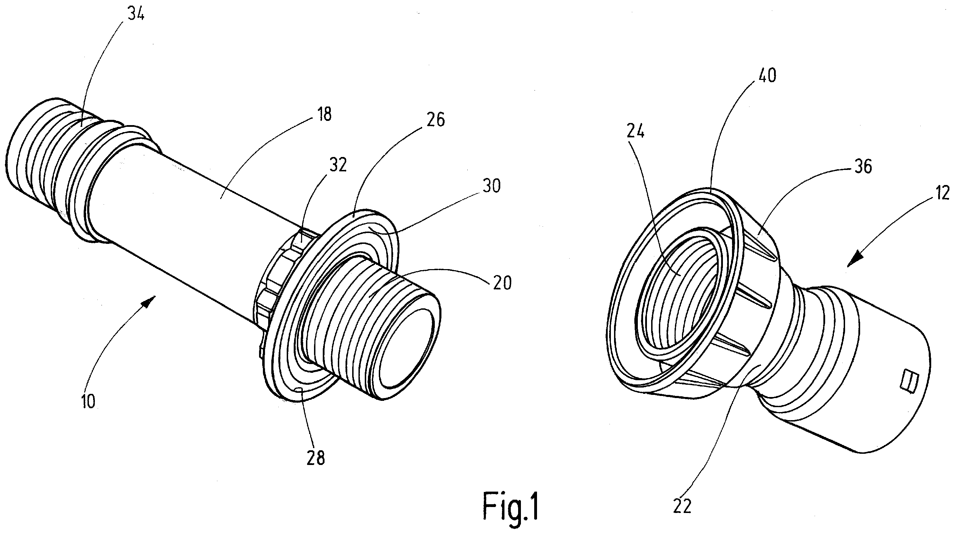

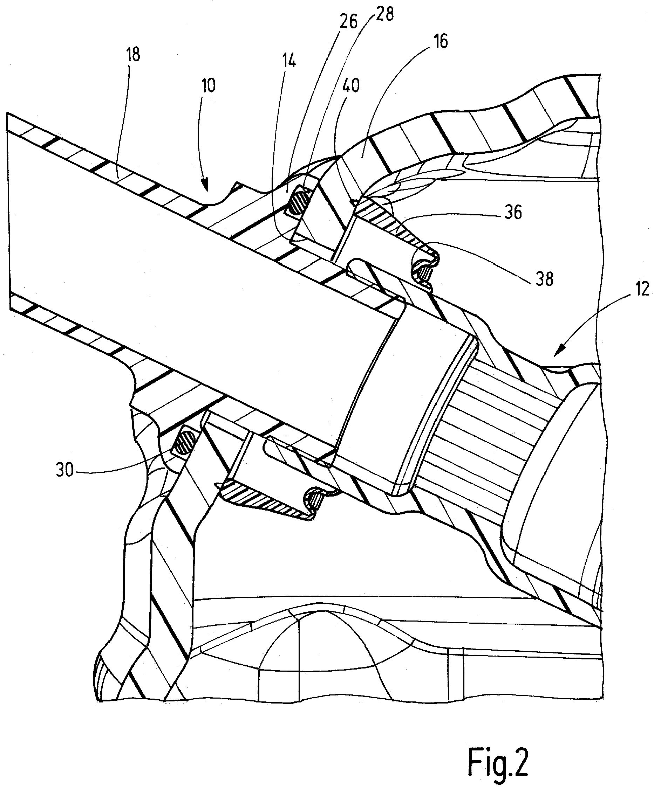

Die in Fig. 1 dargestellte, als Betankungsdurchführung für einen Kunststoff-Kraftstoffbehälter ausgebildete Durchführungsvorrichtung umfasst ein erstes Stutzenelement 10 und ein zweites Stutzenelement 12, die durch eine Durchbrechung 14 in einer Wandung 16 (Fig. 2) des Behälters hindurch miteinander verbindbar sind und dabei einen nach außen hin fluiddichten Zugang zum Behälterinneren schaffen. Hierfür weist das erste Stutzenelement 10 einen ersten Rohrkörper 18 mit einem Außengewinde 20 im Bereich seines einen Endes auf und das zweite Stutzenelement 12 einen zweiten Rohrkörper 22 mit einem komplementären Innengewinde 24 im Bereich seines dem ersten Stutzenelement zugeordneten Endes. Das erste Stutzenelement 10 weist weiterhin einen den Rohrköper 18 im Abstand von dem Außengewinde 20 umschließenden Flansch 26 auf, der eine der Wandung 16 zugewandte Seite mit einem dort in einer Nut 28 angeordneten, als O-Ring ausgebildeten Dichtelement 30 aufweist. Auf der gegenüberliegenden Seite des Flansches ist eine Struktur 32 für den Ansatz eines Werkzeugs zum Verschrauben der zwei Stutzenelemente 10, 12 miteinander vorgesehen. In einem zweiten Endbereich weist der erste Rohrkörper 18 eine Anschlusspartie 34 für den Anschluss eines zu einem Tankeinfüllstutzen führenden Verbindungsrohrs auf.

Das zweite Stutzenelement 12 weist ein Abstützelement 36 auf, das die das Innengewinde 24 aufweisende Partie des zweiten Rohrkörpers 22 ringartig umschließt und sich im zusammengefügten Zustand der zwei Stutzenelemente 10, 12 an der Wandung 16 abstützt und ein Anpressen des Dichtelements 30 gegen die andere Seite der Wandung 16 ermöglicht. Der Flansch 26 des ersten Stutzenelements 10 ist typischerweise auf der Außenseite des die Wandung 16 aufweisenden Behälters angeordnet und das Abstützelement 36 auf der Innenseite des Behälters. Das Abstützelement 36 ist mittels einer Sicke 38 elastisch mit dem zweiten Rohrkörper 22 des zweiten Stutzenelements 12 verbunden, so dass in Richtung einer Längsmittelachse des Rohrkörpers eine gewisse Verschiebbarkeit des Abstützelements 36 gegenüber dem Rohrkörper vorhanden ist, die für einen vorbestimmten gleichbleibenden Anpressdruck des Dichtelements 30 an der Wandung 16 sorgt, wenn diese sich beispielsweise aufgrund von Temperaturschwankungen oder insbesondere Absorption und Desorption von Kraftstoff in die bzw. aus der Wandung 16 geringfügig ausdehnt oder schrumpft. Der Flansch 26 und das Abstützelement 36 sind jeweils in einem Abstand von den Enden der Stutzenelemente angeordnet, so dass jeweils über den Flansch 26 bzw. das Abstützelement 36 axial überstehende Verbindungspartien verbleiben. Um eine Diffusion von Kraftstoff durch die Wandung 16 nach außen zu verhindern, kann diese aus mehreren Schichten gebildet sein, von denen mindestens eine für Kraftstoff undurchlässig ist. Das Abstützelement weist auf einer an der Wandung 16 anliegenden Stirnfläche eine V-förmige Rippe 40 auf, die sich schneidenartig in die vergleichsweise aus weicherem Kunststoffmaterial, typischerweise HDPE, bestehende Wandung 16 einpresst. Hierdurch wird ein sicherer Halt des Abstützelements 36 an der Wandung 16 erzielt, so dass ein Verrutschen der Durchführungsvorrichtung gegenüber der Wandung 16 bei mechanischer Belastung erschwert und eine zusätzliche Dichtung des Behälterinnenraums nach außen geschaffen wird.

Zusammenfassend ist folgendes festzuhalten: Durchführungsvorrichtung für eine Wandung 16, mit einem ersten und einem zweiten Stutzenelement 10, 12, die durch eine Durchbrechung 14 der Wandung 16 hindurch miteinander verbindbar sind, wobei das erste Stutzenelement 10 einen Flansch 26 aufweist, der ein Dichtelement 30 trägt, das im verbundenen Zustand der zwei Stutzenelemente 10, 12 fluiddichtend an einer zur Durchbrechung 14 in der Wandung 16 benachbarten Wandungspartie anliegt, und wobei an dem zweiten Stutzenelement 12 ein Abstützelement 36 angeordnet ist, das sich im miteinander verbundenen Zustand der zwei Stutzenelemente 10, 12 auf der bezüglich des Dichtelements 30 des ersten Stutzenelements 10 anderen Seite der Wandung 16 abstützt. Um eine zuverlässige und dauerhafte Abdichtung der Vorrichtung bezüglich eines von der Wandung 16 umschlossenen Innenraums eines Behälters, insbesondere eine Kunststoff-Kraftstoffbehälters, zu erreichen, wird erfindungsgemäß vorgeschlagen, dass das Abstützelement 36 mit einer elastischen Partie mit dem zweiten Stutzenelement 12 verbunden ist, die eine begrenzte Verschiebung des Abstützelements 36 gegenüber dem zweiten Stutzenelement 12 zumindest in Richtung einer Längsmittelachse des Stutzenelements 12 erlaubt.

## Patentansprüche

1. Durchführungsvorrichtung für eine Wandung (16),
mit einem ersten und einem zweiten Stutzenelement (10, 12), die durch eine Durchbrechung (14) der Wandung (16) hindurch miteinander verbindbar sind,
wobei das erste Stutzenelement (10) einen Flansch (26) aufweist, der ein Dichtelement (30) trägt, das im verbundenen Zustand der zwei Stutzenelemente (10, 12) fluiddichtend an einer zur Durchbrechung (14) in der Wandung (16) benachbarten Wandungspartie anliegt,
und wobei an dem zweiten Stutzenelement (12) ein Abstützelement (36) angeordnet ist, das sich im miteinander verbundenen Zustand der zwei Stutzenelemente (10, 12) auf der bezüglich des Dichtelements (30) des ersten Stutzenelements (10) anderen Seite der Wandung (16) abstützt,
**dadurch gekennzeichnet, dass** das Abstützelement (36) mit einer elastischen Partie mit dem zweiten Stutzenelement (12) verbunden ist, die eine begrenzte Verschiebung des Abstützelements (36) gegenüber dem zweiten Stutzenelement (12) zumindest in Richtung einer Längsmittelachse des Stutzenelements (12) erlaubt, wobei die das Abstützelement (36) mit dem zweiten Stutzenelement (12) verbindende elastische Partie als ringförmige Sicke (38) ausgebildet ist.

2. Vorrichtung nach Anspruch 1, **dadurch gekennzeichnet, dass** das erste Stutzenelement (10) einen ersten Rohrkörper (18) und das zweite Stutzenelement (12) einen zweiten Rohrkörper (22) aufweist.

3. Vorrichtung nach Anspruch 2, **dadurch gekennzeichnet, dass** eines der Stutzenelemente (10) im Bereich eines Endes seines Rohrkörpers (18) eine Außengewindepartie (20) und das andere Stutzenelement (12) im Bereich eines Endes seines Rohrkörpers (22) eine Innengewindepartie (24) aufweist, wobei die Außengewindepartie (20) und die Innengewindepartie (24) zur Verbindung der zwei Stutzenelemente (10, 12) miteinander verschraubbar sind.

4. Vorrichtung nach Anspruch 3, **dadurch gekennzeichnet, dass** der Rohrkörper (18) des ersten Stutzenelements (10) das Außengewinde (20) und der Rohrkörper (22) des zweiten Stutzenelements (12) das Innengewinde (24) aufweist.

5. Vorrichtung nach Anspruch 1 oder 2, **dadurch gekennzeichnet, dass** die zwei Stutzenelemente (10, 12) über einen Bajonettmechanismus oder einen Rastmechanismus miteinander verbindbar sind.

6. Vorrichtung nach Anspruch 1 oder 2, **dadurch gekennzeichnet, dass** die zwei Stutzenelemente (10, 12) mittels Klebstoff oder Schweißung miteinander verbunden sind.

7. Vorrichtung nach einem der Ansprüche 2 bis 6, **dadurch gekennzeichnet, dass** das Abstützelement (36) als den Rohrkörper (22) des zweiten Stutzenelements (12) außenseitig umschließendes Ringelement ausgebildet ist.

8. Vorrichtung nach einem der Ansprüche 1 bis 7, **dadurch gekennzeichnet, dass** das Abstützelement (36) eine der Wandung (16) zugewandte Stirnfläche aufweist, auf der eine keilförmige Rippe (40) angeordnet ist.

9. Vorrichtung nach einem der Ansprüche 1 bis 8, **dadurch gekennzeichnet, dass** die zwei Stutzenelemente (10, 12) und das Abstützelement (36) aus Kunststoff, bevorzugt aus POM oder PA bestehen.

10. Vorrichtung nach einem der Ansprüche 1 bis 9, **dadurch gekennzeichnet, dass** das von dem Flansch (26) des ersten Stutzenelements (10) getragene Dichtelement (30) ein in einer Nut des Flansches (26) angeordneter O-Ring ist.

11. Vorrichtung nach einem der Ansprüche 1 bis 10, **dadurch gekennzeichnet, dass** das erste Stutzenelement (10) eine Struktur (32) für den Ansatz eines Werkzeugs, bevorzugt an der der Wandung abgewandten Seite des Flansches, aufweist.

## Claims

1. A lead-through device for a wall (16),
having a first and a second pipe fitting element (10, 12), which are adapted to be connected to one another through a through-passage (14) in the wall (16),
wherein the first pipe fitting element (10) has a flange (26), which bears a sealing element (30) which, in the connected state of the two pipe fitting elements (10, 12), butts with fluid-sealing action against a wall portion adjacent to the through-passage (14) in the wall (16),
and wherein the second pipe fitting element (12) has arranged on it a supporting element (36) which, in the connected state of the two pipe fitting elements (10, 12), is supported on the other side of the wall (16), as seen with respect to the sealing element (30) of the first pipe fitting element (10),
**characterized in that** the supporting element (36) is connected to the second pipe fitting element (12) by way of an elastic portion which allows limited displacement of the supporting element (36) in relation to the second pipe fitting element (12) at least in the direction of a longitudinal center axis of the pipe fitting element (12), wherein the elastic portion connecting the supporting element (36) to the second pipe fitting element (12) is designed in the form of an annular bead (38).

2. The device as claimed in claim 1, **characterized in that** the first pipe fitting element (10) has a first tube body (18) and the second pipe fitting element (12) has a second tube body (22).

3. The device as claimed in claim 2, **characterized in that** one of the pipe fitting elements (10), in the region of one end of its tube body (18), has an externally threaded portion (20) and the other pipe fitting element (12), in the region of one end of its tube body (22), has an internally threaded portion (24), wherein the externally threaded portion (20) and the internally threaded portion (24) can be screwed to one another in order to connect the two pipe fitting elements (10, 12).

4. The device as claimed in claim 3, **characterized in that** the tube body (18) of the first pipe fitting element (10) has the external thread (20) and the tube body (22) of the second pipe fitting element (12) has the internal thread (24).

5. The device as claimed in claim 1 or 2, **characterized in that** the two pipe fitting elements (10, 12) can be connected to one another via a bayonet mechanism or a latching mechanism.

6. The device as claimed in claim 1 or 2, **characterized in that** the two pipe fitting elements (10, 12) are connected to one another by means of adhesive or welding.

7. The device as claimed in one of claims 2 to 6, **characterized in that** the supporting element (36) is designed in the form of an annular element which encloses the tube body (22) of the second pipe fitting element (12) on the outside.

8. The device as claimed in one of claims 1 to 7, **characterized in that** the supporting element (36) has an end surface directed toward the wall (16) on which a wedge-shaped rib (40) is arranged.

9. The device as claimed in one of claims 1 to 8, **characterized in that** the two pipe fitting elements (10, 12) and the supporting element (36) consist of plastic, preferably of POM or PA.

10. The device as claimed in one of claims 1 to 9, **characterized in that** the sealing element (30), which is borne by the flange (26) of the first pipe fitting element (10), is an O-ring arranged in a groove of the flange (26).

11. The device as claimed in one of claims 1 to 10, **characterized in that** the first pipe fitting element (10) has a structure (32) for the attachment of a tool, preferably on that side of the flange which is directed away from the wall.

## Revendications

1. Dispositif de traversée pour une paroi (16),
comprenant un premier et un second élément faisant office d'embout (10, 12) qui peuvent être reliés l'un à l'autre à travers une ouverture (14) de la paroi (16) ;
dans lequel le premier élément faisant office d'embout (10) présente une bride (26) qui supporte un élément d'étanchéité (30) qui, à l'état relié des deux éléments faisant office d'embouts (10, 12), vient s'appliquer d'une manière étanche aux fluides contre une partie de paroi voisine de l'ouverture (14) dans la paroi (16) ;
et dans lequel, contre le second élément faisant office d'embout (12), est disposé un élément faisant office d'appui (36) qui s'appuie, à l'état relié l'un à l'autre des deux éléments faisant office d'embouts (10, 12), sur l'autre côté de la paroi (16) par rapport à l'élément d'étanchéité (30) du premier élément faisant office d'embout (10) ;
**caractérisé en ce que** l'élément faisant office d'appui (36) est relié, avec une partie élastique, au second élément faisant office d'embout (12), qui permet un déplacement limité de l'élément faisant office d'appui (36) par rapport au second élément faisant office d'embout (12), au moins dans la direction d'un axe médian longitudinal de l'élément faisant office d'embout (12) ; dans lequel la partie élastique reliant l'élément faisant office d'appui (36) au second élément faisant office d'embout (12) est réalisée sous la forme d'une nervure (38) de configuration annulaire.

2. Dispositif selon la revendication 1, **caractérisé en ce que** le premier élément faisant office d'embout (10) présente un premier corps tubulaire (18) et le second élément faisant office d'embout (12) présente un second corps tubulaire (22).

3. Dispositif selon la revendication 2, **caractérisé en ce qu'**un des éléments faisant office d'embout (10), dans la zone d'une extrémité de son corps tubulaire (18), présente une partie (20) munie d'un filet de vis externe et l'autre élément faisant office d'embout (12) présente, dans la zone d'une extrémité de son corps tubulaire (22), une partie (24) munie d'un filet de vis interne ; dans lequel la partie (20) munie d'un filet de vis externe et la partie (24) munie d'un fil de vis interne peuvent être vissées l'une à l'autre à des fins de liaison des deux éléments faisant office d'embouts (10, 12).

4. Dispositif selon la revendication 3, **caractérisé en ce que** le corps tubulaire (18) du premier élément faisant office d'embout (10) présente le filet de vis externe (20) et le corps tubulaire (22) du second élément faisant office d'embout (12) présente le filet de vis interne (24).

5. Dispositif selon la revendication 1 ou 2, **caractérisé en ce que** les deux éléments faisant office d'embouts (10, 12) peuvent être reliés l'un à l'autre via un mécanisme du type à baïonnette ou via un mécanisme d'encliquetage.

6. Dispositif selon la revendication 1 ou 2, **caractérisé en ce que** les deux éléments faisant office d'embouts (10, 12) sont reliés l'un à l'autre au moyen d'un adhésif ou par soudage.

7. Dispositif selon l'une quelconque des revendications 2 à 6, **caractérisé en ce que** l'élément faisant office d'appui (36) est réalisé sous la forme d'un élément annulaire entourant du côté externe le corps tubulaire (22) du second élément faisant office d'embout (12).

8. Dispositif selon l'une quelconque des revendications 1 à 7, **caractérisé en ce que** l'élément faisant office d'appui (36) présente une surface frontale tournée vers la paroi (16), sur laquelle est disposée une arête cunéiforme (40).

9. Dispositif selon l'une quelconque des revendications 1 à 8, **caractérisé en ce que** les deux éléments faisant office d'embouts (10, 12) et l'élément faisant office d'appui (36) sont constitués d'une matière synthétique, de préférence de POM ou de PA.

10. Dispositif selon l'une quelconque des revendications 1 à 9, **caractérisé en ce que** l'élément d'étanchéité (30) supporté par la bride (26) du premier élément faisant office d'embout (10) est un joint torique disposé dans une rainure de la bride (26).

11. Dispositif selon l'une quelconque des revendications 1 à 10, **caractérisé en ce que** le premier élément faisant office d'embout (10) présente une structure (32) pour l'application d'un outil, de préférence contre le côté de la bride qui se détourne de la paroi.
